# EUROPÄISCHE PATENTSCHRIFT

(11) **EP 1 374 358 B1**
(45) Veröffentlichungstag und Bekanntmachung des Hinweises auf die Patenterteilung: **29.09.2004**
(21) Anmeldenummer: 02722281.9
(22) Anmeldetag: 28.03.2002
(51) Int. Cl.: H02G 3/04, H02H 3/18, B65H 75/44, H02G 11/02, H04Q 1/14, H02B 15/00, H04L 12/44

(54) **EINRICHTUNG ZUR TEMPORÄREN VERKABELUNG, INSBESONDERE NOTFALLVERKABELUNG, VON KOMMUNIKATIONSNETZWERKEN**
DEVICE FOR THE TEMPORARY WIRING, ESPECIALLY EMERGENCY WIRING, OF COMMUNICATION NETWORKS
SYSTEME DE CABLAGE TEMPORAIRE, EN PARTICULIER DE CABLAGE D'URGENCE, DE RESEAUX DE COMMUNICATION

(30) Priorität: 04.04.2001 DE 10116649
(43) Veröffentlichungstag der Anmeldung: 02.01.2004
(73) Patentinhaber: Pandacom Networking AG, 63303 Dreieich (DE)
(72) Erfinder: NEUNER, Michael, 63165 Mühlheim (DE)
(74) Vertreter: Wagner, Carsten
(86) Internationale Anmeldenummer: PCT/EP2002/003515
(87) Internationale Veröffentlichungsnummer: WO 2002/082607

(56) Entgegenhaltungen:
- US-A- 5 487 666
- US-A- 5 548 086
- US-A- 6 077 108

## Beschreibung

Die Erfindung betrifft eine Einrichtung zur temporären Verkabelung, insbesondere Notfallverkabelung, von Kommunikationsnetzwerken.

Kommunikationsnetzwerke, beispielsweise Datenverarbeitungsnetzwerke, sind in vielen Unternehmungen wichtiger Bestandteil der Betriebsorganisation, von deren reibungslosem Ablauf der Unternehmenserfolg wesentlich abhängt. Kommt es zu einem Ausfall des Datenverarbeitungsnetzwerkes, so bedeutet dies für die betroffene Abteilung oder unter Umständen sogar für das gesamte Unternehmen eine erhebliche Beeinträchtigung der betrieblichen Abläufe bis hin zu einem kompletten Arbeitsausfall in der betreffenden Abteilung bzw. dem Unternehmen. Da die betrieblichen Abläufe in einem modernen Unternehmen schnell und in Wechselwirkung miteinander erfolgen, wirkt sich auch ein nur kurz andauernder Ausfall des Datenverarbeitungsnetzwerkes nachteilig auf die Unternehmensabläufe aus und verursacht hohe Kosten.

Kommt es zu einem Ausfall des gesamten Datenverarbeitungsnetzwerkes, beispielsweise dadurch, daß sich eine Steckverbindung gelöst hat oder die Verkabelung an irgendeiner Stelle des Netzwerkes beschädigt wurde, so ist es erforderlich, die Ursache für den Ausfall schnellstmöglich aufzuspüren und zu beheben, um das Datenverarbeitungsnetzwerk wieder betriebsbereit zu machen. Dies gestaltet sich in der Praxis oft schwierig und zeitaufwendig, da Fachpersonal erforderlich ist, um den Netzwerkausfall zu beheben. Dieses muß die Ursache für den Ausfall aufspüren, beseitigen und anschließend das Datenverarbeitungsnetzwerk wieder in Betrieb nehmen. Dies verursacht hohe Kosten.

Durch US 5,548,086 ist eine Einrichtung der betreffenden Art zur temporären Verkabelung von Kommunikationsnetzwerken bekannt, die einen als Gehäuse ausgebildeten Grundkörper aufweist, an dem Anschlußmittel zum Anschließen einer Mehrzahl von Datenverarbeitungsgeräten an die Einrichtung sowie Verteilermittel zum Herstellen von Kommunikationsverbindungen zwischen der Zentraleinheit und den Datenverarbeitungsgeräten angeordnet sind.

Durch US 6,077,108 und US 5,487,666 sind jeweils sogenannte Patchpanels bekannt, die jedoch zur temporären Verkabelung einer Zentraleinheit mit einer Mehrzahl von Datenverarbeitungsgeräten nicht geeignet sind.

Durch DE 299 04 648 U1, DE 197 22 107 C1, EP 0 668 645 A1 und EP 0 978 917 A1 sind jeweils Kabeltrommeln bekannt, die jedoch zur temporären Verkabelung einer Zentraleinheit mit einer Mehrzahl von Datenverarbeitungsgeräten nicht geeignet sind.

Der Erfindung liegt die Aufgabe zugrunde, eine Einrichtung der im Oberbegriff des Anspruchs 1 genannten Art anzugeben, die auf einfache, schnelle und flexibele Weise eine temporäre Verkabelung, insbesondere Notfallverkabelung, von Kommunikationsnetzwerken ermöglicht.

Diese Aufgabe wird durch die im Anspruch 1 angegebene Lehre gelöst.

Der Erfindung liegt der Gedanke zugrunde, die Kommunikationsverbindungen in einem Kommunikationsnetzwerk zwischen einem Zentralgerät und mit diesem in Datenverarbeitungsverbindung stehenden Datenverarbeitungsgeräten durch eine temporäre Verkabelung schnell herzustellen.

Erfindungsgemäß weist die Einrichtung zur temporären Verkabelung von Kommunikationsnetzwerken einen Grundkörper auf, der eine Aufwickelvorrichtung für eine Datenübertragungsleitung zum Verbinden der Einrichtung mit einer Zentraleinheit aufweist, wobei an dem Grundkörper Anschlußmittel zum Anschließen einer Mehrzahl von Datenverarbeitungsgeräten an die Einrichtung und mit den Anschlußmitteln verbundene Verteilermittel zum Herstellen von Datenverarbeitungsverbindungen zwischen der Zentraleinheit und den Datenverarbeitungsgeräten angeordnet sind.

Auf diese Weise kann das Kommunikationsnetzwerk, zum Beispiel nach einem durch einen Fehler in der Verkabelung bedingten Ausfall, auf einfache Weise schnell und kostengünstig wieder in den Betriebszustand versetzt werden, ohne daß hierzu Fachpersonal erforderlich ist. Beispielsweise muß bei einem Ausfall eines Datenverarbeitungsnetzwerks lediglich ein in die Zentraleinheit eingesteckter Stecker der Anschlußleitung für die an diese Zentraleinheit angeschlossenen Datenverarbeitungsgeräte entfernt und der Stecker der Leitung zum Verbinden der erfindungsgemäßen Einrichtung mit der Zentraleinheit dort eingesteckt werden. Anschließend wird die Leitung von der Aufwickelvorrichtung der Einrichtung abgerollt, und die Einrichtung wird zu den mit der Zentraleinheit zu verbindenden Datenverarbeitungsgeräten verbracht. Diese Geräte werden dann mittels den an der erfindungsgemäßen Einrichtung vorgesehenen Anschlußmitteln an die Einrichtung angeschlossen. Danach kann das Datenverarbeitungsnetzwerk wieder in Betrieb genommen werden.

Die erfindungsgemäße Einrichtung versetzt somit auch Nichtfachleute in die Lage, ein Kommunikationsnetzwerk schnell und unproblematisch in den Betriebszustand zu versetzen, insbesondere nach einem durch einen Fehler in der Verkabelung bedingten Ausfall wieder in den Betriebszustand zu versetzen.

Handelt es sich bei der erfindungsgemäßen Einrichtung beispielsweise um eine Einrichtung zur Notfallverkabelung, so bietet die erfindungsgemäße Einrichtung darüber hinaus den Vorteil, daß Fachpersonal in aller Ruhe und mit der notwendigen Sorgfalt die Ursache des Netzwerkausfalles suchen und beseitigen kann, während der Netzwerkbetrieb provisorisch durch die erfindungsgemäße Einrichtung gewährleistet ist. Weiterhin bietet die erfindungsgemäße Einrichtung den Vorteil, daß für Zeiten, in denen es erfahrungsgemäß schwierig ist, Fachpersonal für die Behebung eines Netzwerkausfalles hinzuzuziehen, wie beispielsweise während einer Nachtschicht, keine besonderen organisatorischen Vorkehrungen getroffen werden müssen, da das Kommunikationsnetzwerk bei einem Ausfall mit Hilfe der erfindungsgemäßen Einrichtung auch von ungeschultem Personal wieder in Betrieb genommen werden kann.

Nachdem die Ursache für den Netzwerkausfall durch Fachpersonal behoben ist, kann die mittels der erfindungsgemäßen Einrichtung provisorisch hergestellte Verbindung zwischen der Zentraleinheit und den daran angeschlossenen Datenverarbeitungsgeräten wieder aufgetrennt werden, um den normalen Netzwerkbetrieb wieder aufnehmen zu können. Anschließend kann die erfindungsgemäße Einrichtung wieder platzsparend verstaut werden, da sie erfindungsgemäß sehr kompakt gestaltet sein kann. Jedoch sind Größe, Form und Material der erfindungsgemäßen Einrichtung grundsätzlich in weiten Grenzen wählbar.

Die zwischen der Zentraleinheit und den Datenverarbeitungsgeräten ausgetauschten Signale können elektrische, optische oder andere Signale sein. Die in dem Kommunikationsnetzwerk verwendeten Leitungen können dementsprechend zur Übertragung elektrischer, optischer oder anderer Signale geeignete Leitungen sein.

Grundsätzlich können die Verteilermittel auf beliebige Art und Weise geeignet ausgestaltet sein. Sie stellen bei Betrieb der erfindungsgemäßen Einrichtung automatisch Datenübertragungsverbindungen zwischen der Zentraleinheit und den Datenverarbeitungsgeräten bzw. zwischen den Datenverarbeitungsgeräten untereinander her, so daß die Datenverarbeitungsgeräte mit der Zentraleinheit bzw. untereinander Daten austauschen können. Zweckmäßigerweise weisen die Verteilermittel Schaltermittel auf.

Weiterhin ist es zweckmäßig, daß die Verteilermittel eine aktive Netzwerkkomponente aufweisen. Derartige Netzwerkkomponenten arbeiten aktiv und sind geeignet, Datenübertragungsverbindungen zwischen der Zentraleinheit und den Datenverarbeitungsgeräten bzw. zwischen den Datenverarbeitungsgeräten untereinander automatisch schnell und mit hoher Datenübertragungsrate herzustellen, wie dies dem Fachmann allgemein bekannt ist.

Besonders zweckmäßig ist es, daß die aktive Netzwerkkomponente ein Switch, ein Hub, ein Router oder dergleichen ist. Derartige aktive Netzwerkkomponenten stehen als kostengünstige Standardbauteile mit hoher Leistung zur Verfügung.

Eine Weiterbildung der erfindungsgemäßen Lehre sieht vor, daß die Verteilermittel Verstärkermittel zur Verstärkung von zwischen der Zentraleinheit und den Datenverarbeitungsgeräten ausgetauschten Signalen aufweisen.

Eine andere vorteilhafte Weiterbildung der erfindungsgemäßen Lehre sieht vor, daß die Leitung zur Verbindung der Einrichtung mit der Zentraleinheit fest mit dem Grundkörper der Einrichtung verbunden ist, da auf diese Weise ein unerwünschtes Lösen der Leitung von dem Grundkörper beim Abwickeln der Leitung vermieden ist.

Eine weitere vorteilhafte Weiterbildung der erfindungsgemäßen Lehre sieht vor, daß die Anschlußmittel Steckverbindungen zum Anschließen der Datenverarbeitungsgeräte aufweisen. Auf diese Art und Weise ist ein einfaches und schnelles Anschließen der Datenverarbeitungsgeräte an die Einrichtung ermöglicht. Auch können so die an den Datenverarbeitungsgeräten vorhandenen Gerätestecker verwendet werden.

Eine äußerst vorteilhafte Weiterbildung der erfindungsgemäßen Lehre sieht vor, daß der Grundkörper nach Art einer Kabeltrommel ausgebildet ist und so die Aufwickelvorrichtung bildet. Bei dieser Ausführungsform kann die erfindungsgemäße Einrichtung besonders kompakt gestaltet sein, wobei gleichzeitig ein einfaches und problemloses Auf-/Abwickeln der Leitung zur Verbindung mit der Zentraleinheit ermöglicht ist.

Grundsätzlich können die Verteilermittel in beliebiger geeigneter Weise an dem Grundkörper der Einrichtung angeordnet sein, beispielsweise fest oder lösbar mit diesem verbunden sein. Zweckmäßigerweise sind die Verteilermittel jedoch in den Grundkörper der Einrichtung integriert. Dies hat den Vorteil, daß die Einrichtung noch kompakter ist und die Verteilermittel nicht verlorengehen können.

Auch die Anschlußmittel können in beliebiger geeigneter Weise an dem Grundkörper angeordnet sein, beispielsweise fest oder lösbar mit diesem verbunden sein. Zweckmäßigerweise sind die Anschlußmittel jedoch in den Grundkörper der Einrichtung integriert.

Eine andere Weiterbildung der erfindungsgemäßen Lehre sieht vor, daß an dem Grundkörper eine Spannungsversorgungseinrichtung für die Verteilermittel angeordnet ist. So ist gewährleistet, daß für die Verteilermittel eine geeignete Spannungsversorgungseinrichtung jederzeit verfügbar ist.

Grundsätzlich kann bei der vorgenannten Ausführungsform die Spannungsversorgungseinrichtung für die Verteilermittel auf eine beliebige Art und Weise an dem Grundkörper angeordnet sein. Zweckmäßigerweise ist die Spannungsversorgungseinrichtung in den Grundkörper integriert, um so die Einrichtung noch kompakter zu gestalten.

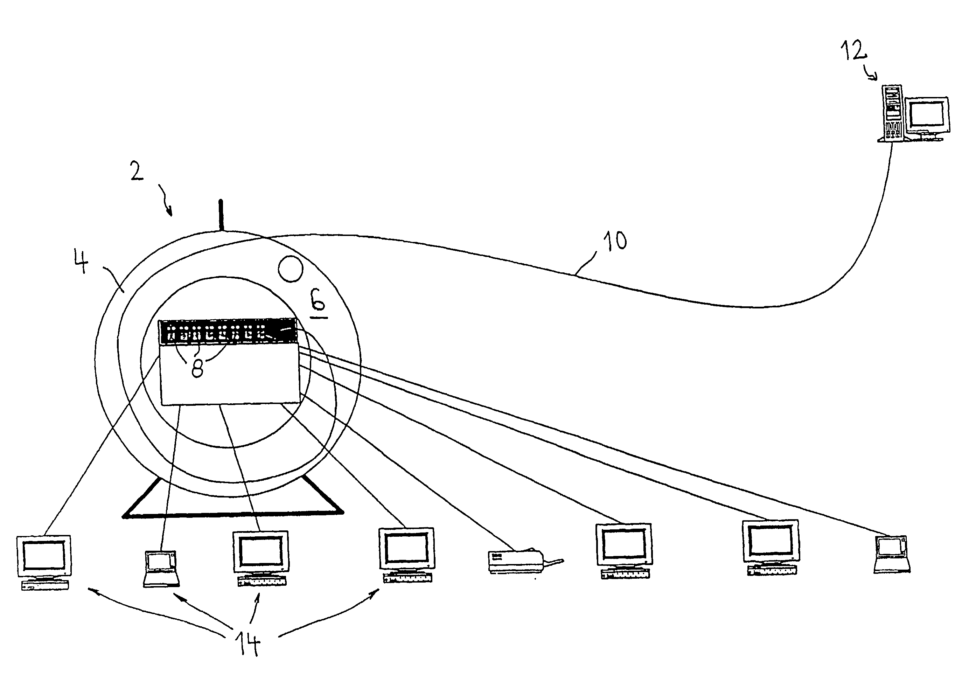

Die Erfindung wird nachfolgend anhand der beigefügten Zeichnung näher erläutert, in deren einziger Figur ein Ausführungsbeispiel der Erfindung dargestellt ist.

In der Zeichnung ist ein Ausführungsbeispiel einer erfindungsgemäßen Einrichtung zur temporären Verkabelung von Datenverarbeitungsnetzwerken im Betriebszustand in grob schematischer Darstellung gezeigt.

Die Zeichnung zeigt eine Einrichtung 2 zur Notfallverkabelung mit einem Grundkörper 4, der eine Aufwickelvorrichtung 6 aufweist, mit Anschlußmitteln 8 und mit in der Zeichnung nicht dargestellten Verteilermitteln. Bei den Verteilermitteln handelt es sich bei diesem Ausführungsbeispiel um einen Switch, der in den Grundkörper 4 der Einrichtung 2 integriert und mittels einer in den Grundkörper 4 integrierten Spannungsversorgungseinrichtung, die in der Zeichnung ebenfalls nicht dargestellt ist, an eine nicht dargestellte Spannungsquelle angeschlossen ist.

Der Grundkörper 4 der Einrichtung 2 ist nach Art einer Kabeltrommel ausgebildet und bildet so die Aufwickelvorrichtung 6 zum Aufwickeln einer Datenübertragungsleitung 10, beispielsweise in Form eines Kabels, mittels derer die Einrichtung 2 mit einer Zentraleinheit 12 elektrisch verbindbar ist. Die Leitung 10 ist bei diesem Ausführungsbeispiel fest mit dem Grundkörper 4 der Einrichtung 2 verbunden, während sie mittels eines in der Zeichnung nicht dargestellten Steckers mit der Zentraleinheit 12 steckverbindbar ist. Über die Anschlußmittel 8 ist die Einrichtung 2 mit Datenverarbeitungsgeräten 14 elektrisch verbindbar, wobei die Anschlußmittel 8 in den Grundkörper 4 der Einrichtung 2 integriert sind. Bei diesem Ausführungsbeispiel weisen die Anschlußmittel 8 Steckverbindungen zum Anschließen der Datenverarbeitungsgeräte 14 auf, so daß nicht dargestellte Gerätestecker der Datenverarbeitungsgeräte 14 zum Herstellen einer Datenübertragungsverbindung mit der Zentraleinheit 12 direkt in den Grundkörper 4 eingesteckt werden können.

Bei Benutzung der erfindungsgemäßen Einrichtung 2 zur Notfallverkabelung von Datenverarbeitungsnetzwerken wird zunächst ein in der Zeichnung nicht dargestellter Stecker einer Anschlußleitung des Netzwerkes an die Zentraleinheit 12 aus dieser ausgesteckt und der ebenfalls nicht dargestellte Stecker der Leitung 10 an dessen Stelle in die Zentraleinheit 12 eingesteckt. Dann verbringt der Benutzer die Einrichtung 2 von der Zentraleinheit 12 zu den an die Zentraleinheit 12 anzuschließenden Datenverarbeitungsgeräten 14 und wickelt dabei die Leitung 10 von der Aufwickelvorrichtung 6 der Einrichtung 2 ab.

Danach schließt der Benutzer die einzelnen Datenverarbeitungsgeräte 14 durch Einstecken ihrer Gerätestecker in die Anschlußmittel 8 der Einrichtung 2 elektrisch an diese an. Nachdem die nicht dargestellte Spannungsversorgungseinrichtung der in der Zeichnung nicht dargestellten Verteilermittel mit einer ebenfalls nicht dargestellten Spannungsquelle verbunden ist, ist die Notfallverkabelung des Datenverarbeitungsnetzwerkes hergestellt, so daß der Betrieb des Datenverarbeitungsnetzwerkes wieder aufgenommen werden kann. Bei Betrieb der Einrichtung 2 schalten die Verteilermittel, die durch einen Switch gebildet sind, in dem Fachmann bekannter Weise Datenübertragungsverbindungen zwischen der Zentraleinheit 12 und den Datenverarbeitungsgeräten 14 bzw. zwischen den Datenverarbeitungsgeräten 14 untereinander.

Während der Betrieb des Datenverarbeitungsnetzwerkes provisorisch durch die Einrichtung 2 zur Notfallverkabelung gewährleistet ist, kann Fachpersonal in Ruhe und mit aller Sorgfalt die Ursache des Netzwerkausfalles suchen und beseitigen. Ist dies geschehen, so kann die Einrichtung 2 wieder außer Betrieb gesetzt werden. Dies geschieht in umgekehrter Reihenfolge zu deren Inbetriebnahme. Abschließend kann die Einrichtung 2 wieder platzsparend verstaut werden.

Durch die erfindungsgemäße Einrichtung 2 ist somit gewährleistet, daß der Betriebszustand eines Netzwerkes auf einfache Weise schnell und kostengünstig hergestellt werden kann, insbesondere nach einem durch einen Fehler in der Verkabelung bedingten Ausfall.

Sollte die an der erfindungsgemäßen Einrichtung 2 vorgesehene Anzahl von Steckverbindungen an den Anschlußmitteln 8 in dem Anwendungsfall nicht ausreichen, um sämtliche vorhandenen Datenverarbeitungsgeräte 14 an die Einrichtung 2 anzuschließen und so mit der Zentraleinheit 12 zu verbinden, so ist es möglich, mehrere erfindungsgemäße Einrichtungen 2 in Reihe zu schalten, um so weitere Datenverarbeitungsgeräte 14 an die Zentraleinheit 12 anschließen zu können. Hierzu wird eine Anschlußleitung einer in der Zeichnung nicht dargestellten weiteren erfindungsgemäßen Einrichtung 2 mittels einer Steckverbindung der Anschlußmittel 8 an die Einrichtung 2 angeschlossen, so daß beide Einrichtungen in Reihe geschaltet sind. Es stehen dann zum Anschluß von Datenverarbeitungsgeräten 14 neben den verbleibenden Steckverbindungen der Anschlußmittel 8 der erfindungsgemäßen Einrichtung 2 noch die Steckverbindungen der Anschlußmittel 8 der weiteren erfindungsgemäßen Einrichtung 2 zur Verfügung. Falls erforderlich, kann eine Mehrzahl von erfindungsgemäßen Einrichtungen 2 in Reihe geschaltet werden. Es ist auch möglich, eine Mehrzahl von erfindungsgemäßen Einrichtungen 2 an ein und diesselbe, mit der Zentraleinheit 12 verbundene erfindungsgemäße Einrichtung 2 anzuschließen.

Die erfindungsgemäße Einrichtung 2 ist insbesondere zur Notfallverkabelung von Datenverarbeitungsnetzwerken geeignet. Sie ist darüber hinaus dazu geeignet, Datenverarbeitungsnetzwerke oder andere Kommunikationsnetzwerke temporär zu verkabeln, beispielsweise bei Konzerten oder sonstigen Veranstaltungen oder bei Einsätzen technischer Hilfsorganisationen.

## Patentansprüche

1. Einrichtung (2) zur temporären Verkabelung, insbesondere Notfallverkabelung, von Kommunikationsnetzwerken, insbesondere Datenverarbeitungsnetzwerken,
mit einem Grundkörper (4),
mit an dem Grundkörper (4) angeordneten Anschlußmitteln (8) zum Anschließen einer Mehrzahl von Datenverarbeitungsgeräten (14) an die Einrichtung (2) und
mit an dem Grundkörper (4) angeordneten, mit den Anschlußmitteln (8) verbundenen Verteilermittel zum Herstellen von Kommunikationsverbindungen zwischen der Zentraleinheit (12) und den Datenverarbeitungsgeräten (14),
**dadurch gekennzeichnet,**
**daß** der Grundkörper (4) eine Aufwickelvorrichtung (6) für eine Leitung (10) zum Verbinden der Einrichtung (2) mit der Zentraleinheit (12) aufweist und
**daß** die Verteilermittel eine aktive Netzwerkkomponente aufweisen.

2. Einrichtung nach Anspruch 1, **dadurch gekennzeichnet, daß** die Verteilermittel Schaltermittel aufweisen.

3. Einrichtung nach Anspruch 1, **dadurch gekennzeichnet, daß** die aktive Netzwerkkomponente ein Switch, ein Hub, ein Router oder dergleichen ist.

4. Einrichtung nach Anspruch 1, **dadurch gekennzeichnet, daß** die Verteilermittel Verstärkermittel zur Verstärkung von zwischen der Zentraleinheit (12) und den Datenverarbeitungsgeräten (14) ausgetauschten Signalen aufweisen.

5. Einrichtung nach Anspruch 1, **dadurch gekennzeichnet, daß** die Leitung (10) zur Verbindung der Einrichtung (2) mit der Zentraleinheit (12) fest mit dem Grundkörper (4) der Einrichtung (2) verbunden ist.

6. Einrichtung nach Anspruch 1, **dadurch gekennzeichnet, daß** die Anschlußmittel (8) Steckverbindungen zum Anschließen der Datenverarbeitungsgeräte (14) aufweisen.

7. Einrichtung nach Anspruch 1, **dadurch gekennzeichnet, daß** der Grundkörper (4) nach Art einer Kabeltrommel ausgebildet ist und so die Aufwickelvorrichtung (6) bildet.

8. Einrichtung nach Anspruch 1, **dadurch gekennzeichnet, daß** die Verteilermittel in den Grundkörper (4) der Einrichtung (2) integriert sind.

9. Einrichtung nach Anspruch 1, **dadurch gekennzeichnet, daß** die Anschlußmittel (8) in den Grundkörper (4) der Einrichtung (2) integriert sind.

10. Einrichtung nach Anspruch 1, **dadurch gekennzeichnet, daß** an dem Grundkörper (4) eine Spannungsversorgungseinrichtung für die Verteilermittel angeordnet ist.

11. Einrichtung nach Anspruch 10, **dadurch gekennzeichnet, daß** die Spannungsversorgungseinrichtung in den Grundkörper (4) integriert ist.

## Claims

1. Device (2) for the temporary wiring, in particular emergency wiring, of communication networks, in particular data processing networks, comprising a base (4), comprising connecting means (8) arranged on the base (4) for connecting a large number of data processing devices (14) to the device (2), and comprising distributing means, arranged on the base (4) and linked to the connecting means (8), for producing communication links between the central unit (12) and the data processing devices (14), **characterised in that** the base (4) comprises a reel-up device (6) for a cable (10) for linking the device (2) to the central unit (12), and **in that** the distributing means comprise an active network component.

2. Device according to claim 1, **characterised in that** the distributing means comprise switching means.

3. Device according to claim 1, **characterised in that** the active network component is a switch, a hub, a router or the like.

4. Device according to claim 1, **characterised in that** the distributing means comprise boosting means for boosting signals exchanged between the central unit (12) and the data processing devices (14).

5. Device according to claim 1, **characterised in that** the cable (10) for linking the device (2) to the central unit (12) is rigidly connected to the base (4) of the device (2).

6. Device according to claim 1, **characterised in that** the connecting means (8) comprise plug-type connectors for connecting the data processing devices (14).

7. Device according to claim 1, **characterised in that** the base (4) is constructed in the manor of a cable drum, and thus forms the reel-up device (6).

8. Device according to claim 1, **characterised in that** the distributing means are incorporated into the base (4) of the device (2).

9. Device according to claim 1, **characterised in that** the connecting means (8) are incorporated into the base (4) of the device (2).

10. Device according to claim 1, **characterised in that** a device for supplying power to the distributing means is arranged on the base (4).

11. Device according to claim 10, **characterised in that** the power-supplying device is incorporated into the base (4).

## Revendications

1. Dispositif (2) de câblage temporaire, en particulier de câblage d'urgence, de réseaux de communication, en particulier de réseaux de traitement de données,
avec un élément de base (4),
avec des moyens de raccordement (8) disposés sur l'élément de base (4) pour le raccordement d'une pluralité d'appareils de traitement de données (14) au dispositif (2) et
avec des moyens de distribution disposés sur l'élément de base (4), reliés aux moyens de raccordement (8), pour l'établissement de liaisons de communication entre l'unité centrale (12) et les appareils de traitement de données (14),
**caractérisé en ce que**,
l'élément de base (4) comporte un dispositif d'enroulement (6) pour une conduite (10) pour la liaison du dispositif (2) avec l'unité centrale (12) et
**en ce que** les moyens de distribution comportent un composant actif de réseau.

2. Dispositif selon la revendication 1, **caractérisé** en que les moyens de distribution comportent des éléments de commutateur.

3. Dispositif selon la revendication 1, **caractérisé en ce que** le composant actif de réseau est un commutateur, un noeud de raccordement, un aiguilleur ou un autre dispositif de ce genre.

4. Dispositif selon la revendication 1, **caractérisé en ce que** les moyens de distribution comportent des éléments d'amplificateur pour l'amplification de signaux échangés entre l'unité centrale (12) et les appareils de traitement de données (14).

5. Dispositif selon la revendication 1, **caractérisé en ce que** la conduite (10) de liaison entre le dispositif (2) et l'unité centrale (12) est reliée de manière fixe à l'élément de base (4) du dispositif (2).

6. Dispositif selon la revendication 1, **caractérisé en ce que** les moyens de raccordement (8) comportent des connecteurs à fiches pour le raccordement des appareils de traitement de données (14).

7. Dispositif selon la revendication 1, **caractérisé en ce que** l'élément de base (4) est configuré à la manière d'un enrouleur de câble et forme ainsi le dispositif d'enroulement (6).

8. Dispositif selon la revendication 1, **caractérisé en ce que** les moyens de distribution sont intégrés dans l'élément de base (4) du dispositif (2).

9. Dispositif selon la revendication 1, **caractérisé en ce que** les moyens de raccordement (8) sont intégrés dans l'élément de base (4) du dispositif (2).

10. Dispositif selon la revendication 1, **caractérisé en ce qu'**un dispositif d'alimentation en courant pour les moyens de raccordement est disposé sur l'élément de base (4).

11. Dispositif selon la revendication 10, **caractérisé en ce que** le dispositif d'alimentation en courant est intégré dans l'élément de base (4).
